(19) Europäisches Patentamt
European Patent Office
Office européen des brevets

(11) **EP 3 416 250 B1**

(12) **FASCICULE DE BREVET EUROPEEN**

(45) Date de publication et mention de la délivrance du brevet:
**08.01.2020 Bulletin 2020/02**

(51) Int Cl.:
**H01S 3/00** *(2006.01)*       **G01J 7/00** *(2006.01)*
*G01J 11/00* *(2006.01)*       *H05H 15/00* *(2006.01)*

(21) Numéro de dépôt: **18177474.6**

(22) Date de dépôt: **13.06.2018**

(54) **PROCEDE ET SYSTEME DE CONTROLE DE LA VITESSE DE PROPAGATION D'UNE IMPULSION LASER**

VERFAHREN UND LASERSYSTEM ZUM STEUERN DER LAUFZEITGESCHWINDIGKEIT VON AUSGESENDETEN LASERPULSEN

METHOD AND DEVICE FOR CONTROLLING THE PROPAGATION VELOCITY OF LASER PULSE EMITTED

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **13.06.2017 FR 1755297**

(43) Date de publication de la demande:
**19.12.2018 Bulletin 2018/51**

(73) Titulaire: **Commissariat à l'Énergie Atomique et aux Énergies Alternatives 75015 Paris (FR)**

(72) Inventeur: **QUERE, Fabien 78140 VELIZY-VILLACOUBLAY (FR)**

(74) Mandataire: **Priori, Enrico et al Marks & Clerk France Immeuble "Visium" 22, avenue Aristide Briand 94117 Arcueil Cedex (FR)**

(56) Documents cités:
- **WEINER A M: "Femtosecond pulse shaping using spatial light modulators", REVIEW OF SCIENTIFIC INSTRUMENTS, AIP, MELVILLE, NY, US, vol. 71, no. 5, 1 mai 2000 (2000-05-01), pages 1929-1960, XP012038262, ISSN: 0034-6748, DOI: 10.1063/1.1150614**
- **A. SAINTE-MARIE ET AL: "Controlling the velocity of ultrashort light pulses in vacuum through spatio-temporal couplings", OPTICA, vol. 4, no. 10, 20 octobre 2017 (2017-10-20), page 1298, XP055477286, DOI: 10.1364/OPTICA.4.001298**

**Description**

L'invention porte sur un procédé de contrôle de la vitesse d'une impulsion laser et sur un système pour la mise en œuvre d'un tel procédé. Elle relève du domaine technique de l'optique ultrarapide (« *ultrafast optics* » en anglais), qui s'occupe de la génération, la manipulation et l'utilisation d'impulsions laser dont la durée est inférieure ou égale à quelques picosecondes (1 ps = $10^{-12}$ s) ou dizaines de picosecondes au plus.

Dans des conditions ordinaires on considère que, dans le vide, une impulsion laser se propage sans déformation et à la vitesse de la lumière (c). Dans des milieux dispersifs, l'impulsion se propage le plus souvent à une vitesse inférieure à c, et son profil temporel évolue au cours de la propagation. Cependant, en exploitant des milieux présentant une dispersion anormale, un comportement non-linéaire ou un gain il est possible de réduire très fortement la vitesse de propagation d'une impulsion, voir même de l'arrêter, ou au contraire de la rendre très supérieure à c (sans pour autant violer les contraintes de la théorie de la relativité : une analyse détaillée montre que ni de l'énergie ni de l'information ne se propagent à une vitesse superluminique). Voir par exemple le document [1] cité en fin de description.

Par ailleurs, le document Weiner A.M., Review of Scientific Instrument, vol. 71, er no. 5, 1 mai 2001, pp. 1929-1960 décrit un procédé de mise en forme d'une impulsion laser comprenant une étape d'application d'un chirp à l'impulsion et une étape d'application d'une modulation spatiale à l'impulsion ; et une étape de focalisation de l'impulsion au moyen d'un système optique présentant une aberration chromatique longitudinale.

Ces vitesses de propagation superluminiques ou très sous-luminiques ne sont obtenues qu'au sein de milieux optiques très particuliers, tels que des vapeurs atomiques, ce qui limite les applications possibles de ces techniques et rend leur mise en œuvre complexe.

L'invention vise à surmonter ces inconvénients de l'art antérieur. Plus particulièrement, elle vise à procurer une méthode pour contrôler la vitesse de propagation d'une impulsion laser ultrabrève, sur une longueur finie, dans le vide ou, plus généralement, dans un milieu optique transparent sans que les propriétés de ce dernier ne doivent satisfaire des conditions particulières. Comme cela sera discuté plus loin, cela permet d'envisager des applications entièrement nouvelles des impulsions se propageant à des vitesses sensiblement différentes de c.

Conformément à l'invention, ce résultat est atteint en exploitant des couplages spatio-temporels d'impulsions laser ultrabrèves. On entend par « ultrabrèves » des impulsions de durée à mi-hauteur inférieure ou égale à 10 ps et de manière préférentielle à 1 ps, voire à 100 fs (femtosecondes ; 1 fs = $10^{-15}$s). Le procédé de l'invention est particulièrement simple à mettre en œuvre car il n'utilise que des éléments optiques conventionnels et se base uniquement sur des effets classiques et linéaires.

Il est bien connu que, en général, les propriétés temporelles d'une impulsion ultrabrève, tel son profil temporel d'intensité, dépendent de la position à laquelle elles sont mesurées, et en particulier de la distance à l'axe optique. De manière réciproque ses propriétés spatiales, par exemple son profil radial d'intensité, varient dans le temps. Ces couplages spatio-temporels sont généralement considérés une nuisance, mais peuvent parfois être exploités pour la génération d'impulsions attosecondes (1 as = $10^{-18}$) [2, 3] ou de faisceaux non diffractants [4], voire en microscopie non-linéaire [5]. A la connaissance de l'inventeur, cependant, les couplages spatio-temporels n'avaient jamais été utilisés auparavant pour contrôler la vitesse d'impulsions ultrabrèves.

Il convient de préciser que, dans le contexte de l'invention, la « vitesse » ou « vitesse de propagation » d'une impulsion est définie comme la vitesse à laquelle son pic d'intensité - c'est-à-dire le point de l'espace où, à un instant donné, l'intensité de l'impulsion est maximale - se déplace le long d'un axe optique. Dans le cas usuel de la propagation dans un milieu dispersif on s'intéresse généralement à la vitesse de groupe de l'impulsion. Cependant, la définition de cette notion en présence de couplages spatio-temporels significatifs est délicate ; elle ne sera donc pas utilisée dans la suite.

Un objet de l'invention est donc un procédé de contrôle de la vitesse d'une impulsion laser comprenant :

- une étape d'application d'un chirp à l'impulsion ; et
- une étape de focalisation de l'impulsion au moyen d'un système optique présentant une aberration chromatique longitudinale ;

moyennant quoi un pic d'intensité de l'impulsion se déplace le long d'un axe de propagation suivant, sur une longueur de propagation finie, un profil de vitesse fonction dudit chirp et de ladite aberration chromatique longitudinale.

Selon des modes de réalisation particuliers :

- Le procédé peut comprendre également une étape préalable de détermination d'au moins un paramètre, choisi parmi un paramètre quantifiant ledit chirp et un paramètre quantifiant ladite aberration chromatique longitudinale, en fonction d'un profil de vitesse cible dudit pic d'intensité de ladite impulsion laser.
- Plus précisément, ladite étape préalable peut comprendre la détermination d'au moins un paramètre quantifiant ledit chirp, ladite aberration chromatique étant considérée constante.

- La dérivée seconde de la phase spectrale $\varphi$ de l'impulsion laser par rapport à la fréquence angulaire $\omega$ $\frac{\partial^2\varphi}{\partial\omega^2}$, quantifiant le chirp, et $\alpha$ la courbure du front d'impulsion, grandeur physique ayant pour dimension T.L$^{-2}$ (e.g., s.m$^{-2}$), laquelle quantifie l'aberration chromatique longitudinale, peuvent notamment être choisies de manière à respecter la relation :

$$\frac{\partial^2\varphi}{\partial\omega^2} = \alpha w_0^2 z_R \left( \frac{1}{v(z)} - \frac{1}{c} \right)$$

où $w_0$ est le rayon de gorge avant focalisation du faisceau laser correspondant à une composante spectrale à une fréquence centrale de l'impulsion, considéré gaussien, et $z_R$ sa longueur de Rayleigh, c la vitesse de la lumière dans le vide et $v(z)$ le profil de vitesse cible, exprimant la vitesse de déplacement du pic d'intensité de l'impulsion en fonction de sa position z le long de l'axe de propagation.
- Ladite impulsion peut présenter une durée à mi-hauteur limitée par transformée de Fourier, $\tau_F$, inférieure ou égale à 10 ps et de préférence inférieure ou égale à 1 ps.
- L'aberration chromatique longitudinale dudit système optique peut être suffisamment importante pour que $\tau_p \geq \tau_F$, où :

  • $\tau_F$ est la durée à mi-hauteur limitée par transformée de Fourier de l'impulsion laser ;
  • $\tau_p = \alpha w_0^2$ où $\alpha$ est la courbure du front d'impulsion, quantifiant l'aberration chromatique longitudinale, et $w_0$ est le rayon de gorge avant focalisation du faisceau laser correspondant à une composante spectrale à une fréquence centrale de l'impulsion, considéré gaussien.

- Ledit chirp peut présenter une composante du troisième ordre, moyennant quoi ledit pic d'intensité de l'impulsion se déplace le long dudit axe de propagation avec une accélération constante et non nulle sur ladite longueur de propagation finie.

Un autre objet de l'invention est l'utilisation d'un tel procédé selon pour l'accélération de particules par laser.

Encore un autre objet de l'invention est un système pour la mise en œuvre d'un tel procédé comprenant :

  • une source d'impulsions laser présentant une durée à mi-hauteur limitée par transformée de Fourier, $\tau_F$, inférieure ou égale à 10 ps et de préférence inférieure ou égale à 1 ps ;
  • un modulateur de phase optique, configure pour appliquer un chirp auxdites impulsions laser ; et
  • un système optique de focalisation desdites impulsions lasers présentant une aberration chromatique longitudinale suffisamment importante pour que $\tau_p \geq \tau_F$, où $\tau_p = \alpha w_0^2$ où $\alpha$ est la courbure du front d'impulsion, quantifiant l'aberration chromatique longitudinale, et $w_0$ est le rayon de gorge avant focalisation du faisceau laser correspondant à une composante spectrale à une fréquence centrale de l'impulsion, ledit faisceau étant considéré comme gaussien.

Ledit modulateur optique de phase peut être adapté pour appliquer auxdites impulsions un chirp réglable. Il peut notamment être ine ligne à retard dispersive.

D'autres caractéristiques, détails et avantages de l'invention ressortiront à la lecture de la description faite en référence aux dessins annexés donnés à titre d'exemple et qui représentent, respectivement :

- La figure 1, de manière schématique, la mise en œuvre d'un procédé selon un mode de réalisation de l'invention ;
- Les figures 2A à 2D, des graphiques illustrant de manière intuitive comment la combinaison d'un *chirp* et d'une courbure du front d'impulsion, résultant d'une aberration chromatique longitudinale, peut déterminer la vitesse de propagation d'une impulsion ultrabrève ;
- La figure 3, un graphique exprimant la vitesse de propagation d'une impulsion laser selon l'invention en fonction de son *chirp,* supposé linéaire, et pour une courbure du front d'impulsion donnée ;
- Les figures 4 et 5, des graphiques illustrant les propriétés d'une impulsion ultrabrève présentant à la fois un *chirp* et une courbure du front d'impulsion ;
- Les figures 6 et 7, des graphiques illustrant la perte d'intensité des impulsions provoquée par la mise en œuvre du procédé de l'invention ;
- Les figures 8A - 8E, des graphiques illustrant des impulsions, obtenues conformément à l'invention, présentant diverses vitesses de propagation, constantes (8A - 8C) ou non constantes (8D, 8E) ; et
- La figure 9, le schéma d'un système optique selon un mode de réalisation de l'invention.

Une impulsion laser ultrabrève présente nécessairement un spectre large ; elle peut donc être considérée constituée d'une pluralité de composantes spectrales. Lorsque l'impulsion est aussi brève que sa largeur spectrale le permet (elle est « limitée par transformée de Fourier », ou «Fourier transform-limited » en anglais), ces différentes composantes spectrales sont en phase, et leur phase spectrale est constante ou linéaire.

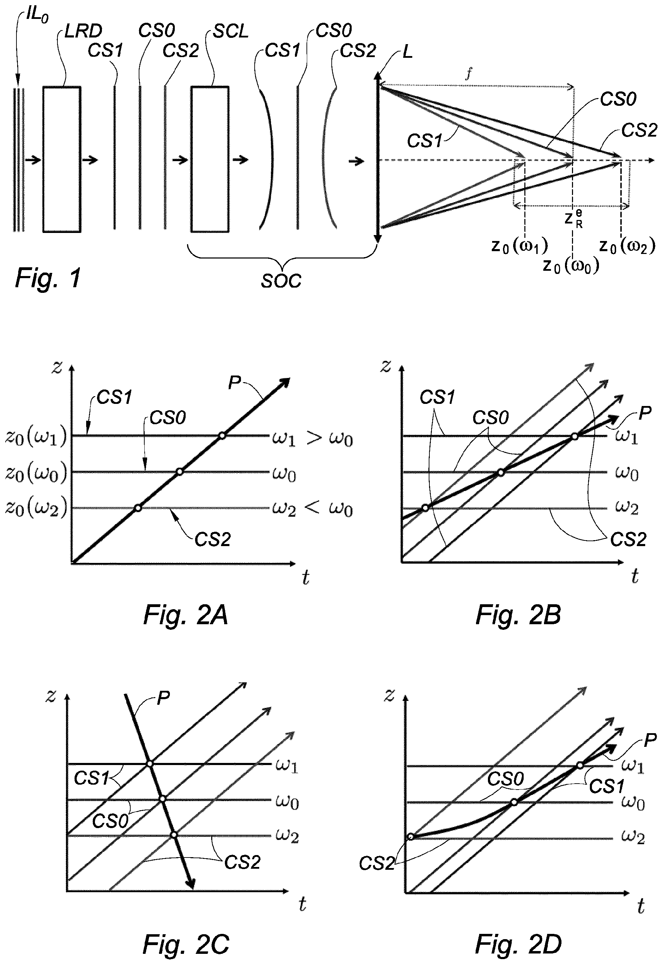

Sur la figure 1, la référence $IL_0$ désigne une impulsion laser ultrabrève limitée par transformée de Fourier et collimatée (front d'onde plan), générée par exemple par un oscillateur laser fonctionnant en verrouillage de phase et, le cas échéant, amplifiée. Cette impulsion $IL_0$ traverse une ligne à retard dispersive LRD qui introduit un retard dépendant de la fréquence. Dans le domaine spectral, ce retard se traduit par une phase spectrale non constante ; dans le domaine temporel, il induit une variation dans le temps de la fréquence instantanée de l'impulsion (un « chirp », « gazouillis » en anglais). Le cas le plus simple est celui du chirp linéaire, qui correspond à une fréquence qui varie linéairement dans le temps et donc à une phase spectrale quadratique :

$$\varphi(\omega) = -\frac{\beta}{2}\delta\omega^2 \tag{1}$$

où $\delta\omega = \omega - \omega_0$, $\omega_0$ étant la fréquence centrale de l'impulsion laser, et $\beta$ un paramètre quantifiant le chirp. Il est cependant possible de considérer des cas plus complexes comme par exemple le chirp quadratique, où la phase spectrale est une fonction cubique de la fréquence.

Sur la figure 1 cela est illustré de manière schématique en représentant trois composantes spectrales CS1, de fréquence angulaire $\omega_1$ et subissant un retard $\Delta t_1$, CS0, de fréquence angulaire $\omega_0$ et subissant un retard $\Delta t_0$, et CS2, de fréquence angulaire $\omega_2$ et subissant un retard $\Delta t_2$, espacées le long de l'axe optique z. Bien que trois composantes spectrales discrètes soient représentées, en réalité une impulsion laser a généralement un spectre continu, et donc une infinité de composantes spectrales.

Un système optique SCL (typiquement, un assemblage de lentilles) présentant une aberration chromatique longitudinale induit une courbure différente du front d'onde de chaque composante spectrale. Par exemple, la composante spectrale CS1, qui a subi le retard le plus important, acquiert une courbure positive (est défocalisée), caractérisée par un rayon de courbure $R(\omega_1)>0$ ; la composante spectrale CS0 garde une courbure nulle, caractérisée par un rayon de courbure $R(\omega_0)$ infini, et la composante spectrale CS2, qui a subi le plus petit retard, acquiert une courbure négative (est focalisée), caractérisée par un rayon de courbure $R(\omega_2)<0$. Dans la suite on considèrera uniquement le cas où la courbure du front d'onde s'exprime sous la forme :

$$\frac{1}{R(\omega)} = 2c\alpha\frac{\delta\omega}{\omega_0} \tag{2}$$

$\alpha$ étant un paramètre quantifiant l'aberration chromatique longitudinale et appelé courbure du front d'impulsion ; cette relation est valable pourvu que $\delta\omega \ll \omega_0$ (par exemple $\omega_0 \geq 10\cdot\delta\omega$). Dans ces conditions on parle de « courbure du front d'impulsion », car dans le domaine temporel cette aberration se traduit par un retard de l'impulsion dépendant quadratiquement de la distance $|\mathbf{r}|$ de l'axe optique ; ainsi, l'enveloppe $A(t,\mathbf{r})$ de l'impulsion est une fonction de $t-\alpha|\mathbf{r}|^2$ uniquement : $A(t-\alpha|\mathbf{r}|^2)$. Il est également possible de considérer des cas plus complexes, où $1/R(\omega)$ est une fonction non-linéaire de $\omega$ et le couplage spatio-temporel ne peut plus être exprimé par un seul paramètre $\alpha$, mais cela complique le traitement théorique.

Ensuite une lentille achromatique L (ou un miroir, intrinsèquement achromatique) de longueur focale f, focalise les différentes composantes spectrales sur son axe optique z. Ensemble, le système SCL et la lentille L forment ce qu'on convient d'appeler un système optique chromatique SOC.

Les différentes composantes spectrales présentent, en amont de la lentille L, des fronts d'onde de courbures différentes ; ainsi, elles sont focalisées en des points différents de l'axe z. Plus précisément, la composante CS1 est focalisée en amont du point focal de la lentille, CS0 en correspondance de ce point focal et CS2 en aval de ce dernier.

On appelle « longueur de Rayleigh étendue », désignée par le symbole $z_R^e$ la longueur sur laquelle sont étalés les points de focalisation $z_0(\omega)$ des différentes composantes spectrales de l'impulsion.

En outre, ces composantes spectrales sont focalisées à des instants différents : cela est dû à la fois au fait qu'elles doivent parcourir des trajets de longueur différente, et au retard introduit par la ligne dispersive LRD. Chaque composante spectrale forme, à l'endroit et à l'instant de sa focalisation optimale, un pic d'intensité. En jouant sur le chirp et sur la courbure du front d'impulsion on peut contrôler la vitesse à laquelle ce pic se déplace à l'intérieur de la longueur de Rayleigh étendue.

Cela peut être compris à l'aide des figures 2A - 2D, qui sont des graphiques dans lesquels l'axe des abscisses représente le temps et celui des ordonnées la position le long de l'axe z. Des lignes horizontales représentent les points de focalisation optimale des différentes composantes spectrales : $z_0(\omega_1)$, $z_0(\omega_0)$, $z_0(\omega_2)$. Des flèches obliques représentent la propagation des différentes composantes spectrales ; ces composantes se propageant toutes à une même vitesse, la vitesse de la lumière c ; par conséquent les flèches sont parallèles et présentent une même pente, qui vaut justement « c ». Le point d'intersection entre la ligne horizontale et la flèche oblique représentant une même composante spectrale correspond à la position et à l'instant de focalisation optimale de ladite composante spectrale. Les différents points d'intersection forment une ligne P qui représente la trajectoire du pic d'intensité le long de l'axe z. La pente locale de cette ligne représente la vitesse instantanée de l'impulsion.

La figure 2A se rapporte au cas - qui ne relève pas de l'invention - d'une impulsion sans chirp. La ligne P et les flèches représentant la propagation des différentes composantes spectrales sont superposées. Le pic d'intensité se propage à la vitesse c.

La figure 2B se rapporte au cas d'un chirp linéaire, ce qui se traduit par le fait que les flèches représentant la propagation des différentes composantes spectrales ne sont plus superposées. Dans ce cas spécifique, les composantes spectrales qui sont focalisées aux distances les plus élevées de la lentille sont également celles qui ont subi les retards les plus importants. Il en résulte une vitesse de propagation du pic d'intensité inférieure à c.

La figure 2C correspond également au cas d'un chirp linéaire, mais cette fois les composantes spectrales qui sont focalisées aux distances les plus élevées de la lentille sont celles qui ont subi les retards les moins importants. Dans ces conditions, la vitesse de propagation du pic d'intensité est négative, et de valeur absolue supérieure à c. Concrètement, un pic d'intensité apparait à une distance de la lentille supérieure à f, se propage (dans ce cas, à vitesse superluminique) vers la lentille sur une longueur $z_R^e$, puis il s'atténue jusqu'à disparaitre.

La figure 2D se différencie de la figure 2B en ce que le chirp n'est plus linéaire, mais quadratique (phase spectrale comprenant une composante du troisième ordre). Cela se traduit par le fait que les flèches représentant la propagation des différentes composantes spectrales ne sont pas espacées de manière régulière, alors même que $\omega_2-\omega_0=\omega_0-\omega_1$. Dans ces conditions, sur la longueur de Rayleigh étendue, le pic d'intensité se déplace sur l'axe z avec une accélération constante, et donc une vitesse croissante.

Bien entendu, d'autres configurations sont possibles : vitesse positive et superluminique, vitesse négative et sous-luminique, accélération variable dans le temps, voire même un cas limite de vitesse infinie.

Une étude semi-quantitative du procédé de l'invention peut être menée grâce à un modèle simplifié dans le cas d'un chirp linéaire et d'une aberration chromatique longitudinale conduisant à une courbure du front d'impulsion. Le champ électrique de l'impulsion peut s'écrire :

$$E(\boldsymbol{r},t) = exp(i\omega_0 t)A_0(t - \alpha|\boldsymbol{r}|^2) \qquad (3)$$

où r est le vecteur position dans un plan perpendiculaire à l'axe z et $A_0$ l'enveloppe complexe de l'impulsion, comprenant notamment un terme de phase $-\frac{\beta}{2}\delta\omega^2$ correspondant au chirp. On remarque que, à la position radiale $|\boldsymbol{r}|=w_0$ ($w_0$ étant la largeur de gorge du faisceau laser portant l'impulsion, supposé gaussien) l'impulsion est retardée de $\tau_P = \alpha w_0^2$.

En calculant la transformée de Fourier de (3) on obtient :

$$E'(\boldsymbol{r},\omega) = exp(-i\,\alpha\,\delta\omega\,|\boldsymbol{r}|^2)A'_0(\delta\omega) \qquad (4)$$

La phase spatiale en fonction de la fréquence $\omega$ peut s'écrire

$$\varphi(\boldsymbol{r},\omega) = -\frac{\omega|\boldsymbol{r}|^2}{2cR(\omega)} \qquad (5)$$

où

$$\frac{1}{R(\omega)} = 2c\alpha\frac{\delta\omega}{\omega_0} \qquad (6)$$

est la courbure du front d'onde en fonction de la fréquence (comme dans le cas de l'équation (2), on suppose $\delta\omega<<\omega_0$).

Après focalisation par la lentille L de longueur focale f, la courbure du front d'onde devient R'($\omega$) avec $1/R'(\omega)=1/H(\omega)-1/f$. Si le faisceau incident sur la lentille est quasi-collimaté, $R(\omega)>>f$ (par exemple, $R(\omega)\geq 10\cdot f$) et donc

$$R'(\omega) \cong -f - \frac{f^2}{R(\omega)} \qquad (7)$$

Une composante spectrale de fréquence angulaire $\omega$ est focalisée à un point $z_0(\omega)$ à une distance -R'($\omega$) de la lentille. En prenant par convention $z_0(\omega_0)=0$ et en supposant que $\delta\omega<<\omega_0$ (par exemple, $\delta\omega\leq\cdot\omega_0/10$) on peut écrire :

$$z_0(\omega) = 2f^2c\alpha\frac{\delta\omega}{\omega_0} = \tau_P z_R \delta\omega \qquad (8)$$

où $z_R = \lambda_0 f^2/\pi w_0^2$ est la longueur de Rayleigh, $\lambda_0$ étant la longueur d'onde correspondant à la fréquence angulaire $\omega_0$. Il est intéressant de noter que lorsque plutôt $\tau_P >>\tau_F$, ou bien $\alpha \gg \tau_F/w_0^2$ (par exemple, $\tau_P\geq 5\cdot\tau_F$), $z_R^e/z_r = \tau_P \Delta\omega \propto \tau_P/\tau_F$, $\tau_F$ étant la durée de l'impulsion limitée par transformée de Fourier et $\Delta\omega$ la largeur spectrale (par exemple, largeur à mi-hauteur) de l'impulsion.

On considère maintenant la présence du chirp linéaire, qui jusqu'à présent était « caché » dans la phase de l'enveloppe complexe $A_0$ de l'impulsion. Ce chirp correspond à une phase spectrale spatialement homogène $-\frac{\beta}{2}\delta\omega^2$. Des valeurs élevées du paramètre $\beta$ ($\beta \gg \tau_F^2$, par exemple, $\beta\geq 5\cdot\tau_F^2$) imposent une relation linéaire entre la fréquence et l'instant d'arrivée d'une composante spectrale à son point de focalisation. Ainsi, la composante spectrale de fréquence $\omega$ arrive à la position $z_0(\omega)$ à l'instant :

$$t_0(\omega) = -\frac{\partial\varphi(z_0,\omega)}{\partial\omega} = \frac{z_0(\omega)}{c} + \beta\delta\omega \qquad (9)$$

En combinant les équations (8) et (9) on peut trouver la vitesse de propagation du pic de l'impulsion, *v*, telle que $z_0=vt_0$ pour toutes les fréquences $\omega$ :

$$v = \frac{c}{1+\frac{\omega_0\cdot\beta}{2f^2\cdot\alpha}} \qquad (10)$$

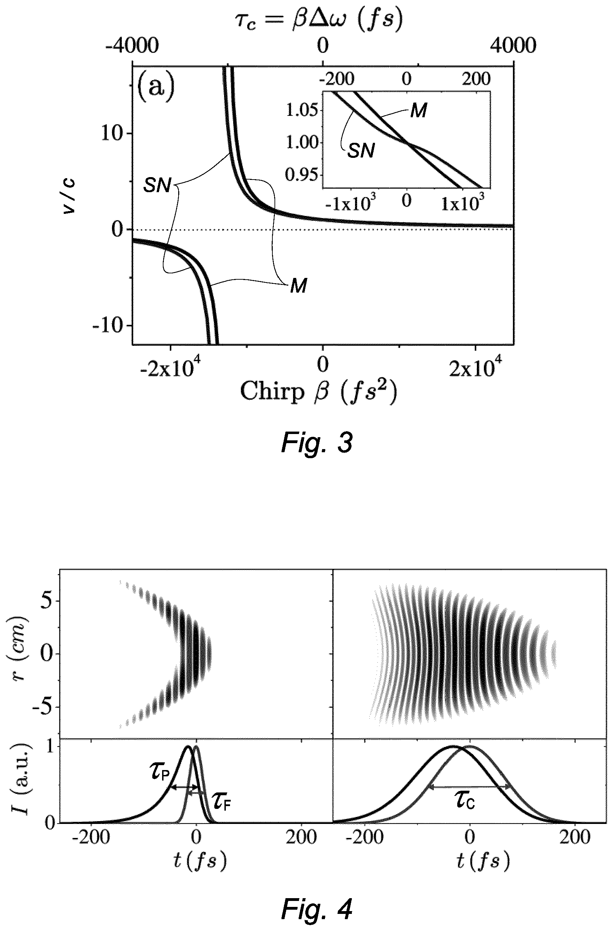

La figure 3 est un graphique de la vitesse *v* en fonction du paramètre de chirp $\beta$ (ou, de manière équivalente, de $\tau_c= \beta\cdot\Delta\omega$, durée de l'impulsion en présence d'un chirp important) pour $\alpha$=3 fs/cm$^2$, $\lambda_0 = 2\pi\frac{c}{\omega_0} =$ 800 nm, f=1 m. La courbe M correspond à la valeur calculée par application de l'équation (10), tandis que la courbe SN a été obtenue par simulation numérique. L'insert montre une vue de détail de ces courbes pour des faibles valeurs de $\beta$. On peut constater que, malgré sa simplicité, le modèle théorique exposé ci-dessus constitue une bonne approximation de la réalité.

Les équations (9) et (10) peuvent être généralisées au cas d'un chirp non linéaire, c'est-à-dire d'une phase spectrale arbitraire :

$$\frac{\partial^2 \varphi}{\partial \omega^2} = \alpha w_0^2 z_R \left( \frac{1}{v(z)} - \frac{1}{c} \right) \tag{11}$$

où v(z) est relié à ω par l'équation

$$v(z) = v(\tau_P z_R \delta\omega) = v(2f^2 c\alpha \frac{\delta\omega}{\omega_0}).$$

L'équation (10) peut être utilisée pour déterminer le chirp (exprimé par $\frac{\partial^2 \varphi}{\partial \omega^2}$) et l'aberration chromatique longitudinale (quantifiée par $\alpha$) qui permettent d'obtenir un profil de vitesse voulu en fonction de la coordonnée z. En pratique, le plus souvent, le paramètre de courbure du front d'impulsion $\alpha$ sera considéré fixe et l'équation (10) sera utilisée pour déterminer $\partial^2 \varphi / \partial \omega^2$ à partir d'un profil de vitesse cible $v(z)$.

Le principe de l'invention a été validé grâce à des simulations numériques.

La partie supérieure gauche de la figure 4 représente le champ électrique spatio-temporel d'une impulsion sans chirp mais présentant une courbure du front d'impulsion $\alpha$=3 fs/cm$^2$ (la fréquence optique a été réduite pour des raisons de visibilité) et une largeur de gorge avant focalisation w$_0$=5 cm. On observe que l'impulsion prend une forme courbée dans le plan (z,r), ce qui justifie l'appellation de « courbure du front d'impulsion ». La durée « locale » de l'impulsion, mesurée en son centre (r=0), vaut $\tau_F$=25 fs ; à cause de la courbure du front d'impulsion, cependant, la durée intégrée spatialement vaut approximativement $\tau_P$=75 fs. Cela est illustré par la partie inférieure gauche de la figure.

La partie supérieure droite de la figure représente le champ électrique spatio-temporel de cette même impulsion après l'introduction d'un chirp linéaire de paramètre $\beta$=-6380 fs. On parle dans ces conditions de « impulsions CPLC », c'est-à-dire avec chirp et chromatisme longitudinal (de l'anglais « *Chirped Pulses with Longitudinal Chromatism* ».

La partie inférieure droite de la figure montre le profil temporel d'intensité de l'impulsion sur l'axe (courbe noire) et intégré temporellement (courbe grise) ; dans les deux cas, la durée de l'impulsion est sensiblement égale à $\tau_c$= |$\beta$|·$\Delta\omega$. L'intensité est exprimée en unités arbitraires (a.u.).

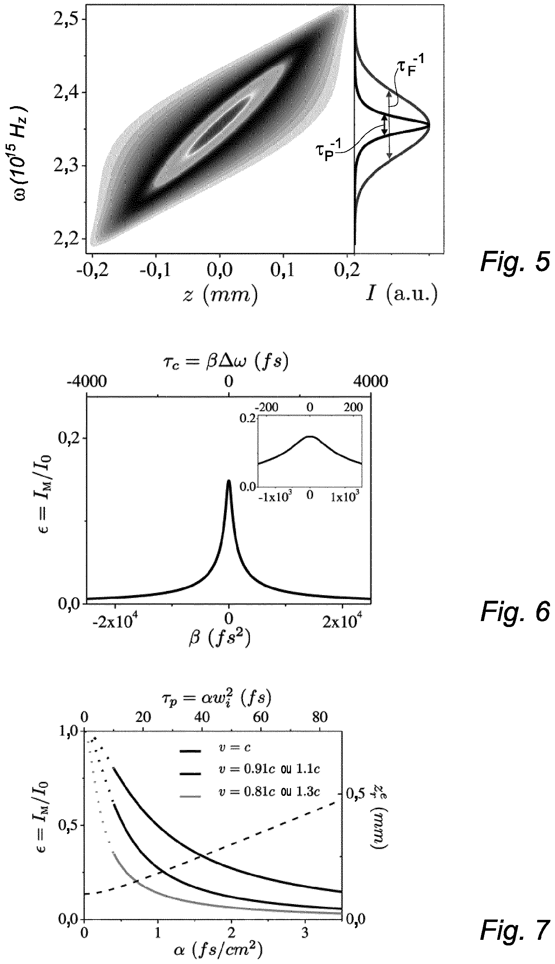

La figure 5 représente le spectre de l'impulsion focalisée en fonction de la coordonnée longitudinale z. Le « chirp longitudinal », c'est-à-dire le fait que des composantes spectrales différentes sont focalisées à des positions différentes le long de l'axe z, est clairement visible. Les courbes sur la droite de la figure représentent le spectre en z=0 (courbe noire, largeur spectrale de l'ordre de 1/|$\tau_P$|) et intégré spatialement (courbe grise, largeur spectrale de l'ordre de 1/$\tau_F$).

Les simulations (mais ce résultat peut aussi être trouvé grâce à une analyse théorique plus approfondie que le simple modèle exposé plus haut) ont permis de mettre en évidence le fait que l'intensité de pic I$_M$ de l'impulsion CPLC focalisée est d'autant plus réduite que le paramètre de chirp $\beta$ est important. Cela est illustré par la figure 6. Une comparaison avec la figure 3 montre qu'une vitesse de propagation très supérieure ou inférieure à c, voire négative, est obtenue au prix d'une réduction de l'intensité de pic (quantifiée par le paramètre $\epsilon = \frac{I_M}{I_0}$, I$_0$ étant l'intensité de pic de l'impulsion focalisée en l'absence de chirp et d'aberration chromatique) d'un voire deux ordres de grandeur. Cet inconvénient de l'invention doit néanmoins être relativisé, car aujourd'hui il est possible de générer des impulsions femtosecondes ayant une puissance de pic de l'ordre des centaines de Terawatts (1 TW=10$^{12}$W), voire plusieurs Petawatts (1 PW=10$^{15}$W), qui permettent une fois focalisés d'atteindre des intensités considérables (>10$^{21}$ W/cm$^2$).

L'aberration chromatique longitudinale affecte aussi l'intensité de pic maximale de l'impulsion CPLC. Cela est mis en évidence par la figure 7 qui montre la dépendance de $\alpha$ (échelle inférieure) ou, de manière équivalente, de $\tau_P$ (échelle supérieure) du paramètre de réduction de l'intensité de pic $\varepsilon$ pour trois valeurs différentes de valeur absolue de ($\beta/\alpha$) (et donc cinq vitesses de propagation différentes : $v$=c ($\beta/\alpha$=0), $v$=0,91·c ou 1,1·c ($\beta/\alpha$=±7,71·10$^2$ fs·cm$^2$), $v$=0,81·c ou 1,3·c($\beta/\alpha$=±1,95·10$^3$ fs·cm$^2$)). Les courbes $\varepsilon(\alpha)$ sont en trait pointillé pour $\alpha$<0,5 fs/cm$^2$, car le modèle décrit plus haut ne s'applique pas pour des trop petites valeurs du paramètre $\alpha$.

En outre, la longueur de Rayleigh étendue $z_R^e$ augmente avec $\alpha$, comme illustré par la ligne pointillée sur cette même figure 7. On remarque que $z_R^e \to z_R$ pour $\alpha$→0 (l'équation 8, selon laquelle $z_R^e$ est proportionnel à $\alpha$, ne s'applique pas pour $\alpha$ petit). On peut ainsi constater qu'une variation de +30%/-20% de la vitesse de propagation de l'impulsion par rapport au cas $v$=c peut être obtenue, sur une longueur de Rayleigh étendue de plusieurs centaines de nanomètres, au prix d'une perte d'intensité de pic d'un facteur 100 environ.

En se limitant, dans un souci de simplicité, au cas d'un chirp linéaire, la vitesse de l'impulsion est déterminée par la valeur du rapport $\beta/\alpha$ (équation 10). Un nombre infini de couples de valeurs des paramètres $\alpha$ et $\beta$ permet donc d'obtenir une vitesse cible donnée. Le choix d'un couple de valeurs particulier résulte typiquement d'un compromis entre l'intensité du pic de l'impulsion focalisée et la longueur de Rayleigh étendue - deux critères que l'on souhaite le plus souvent maximiser. Le plus souvent $\alpha$ sera choisi de telle façon que $\tau_p \geq \tau_F$. Le respect de cette condition assure que

$z_R^e$ est sensiblement supérieur à $z_R$.

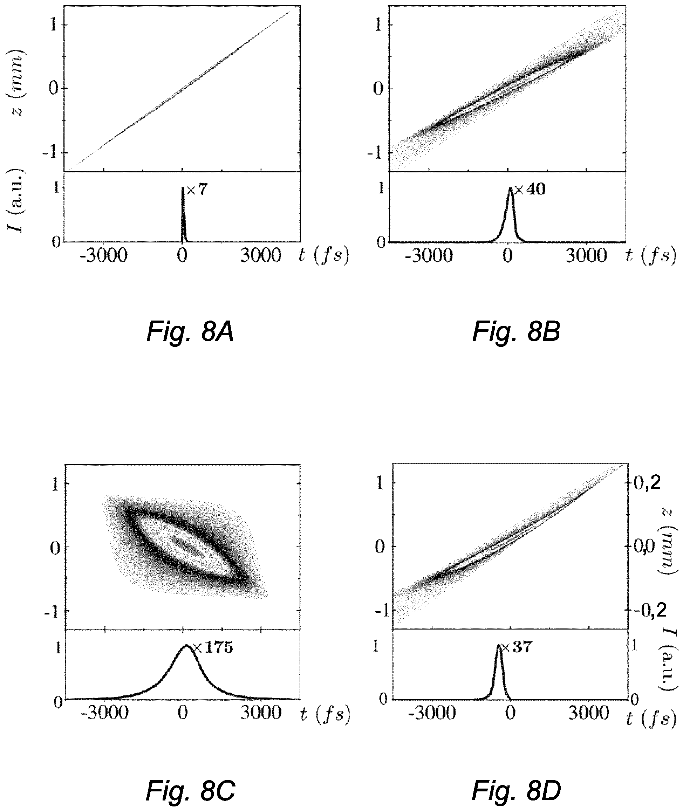

Les figures 8B à 8E montrent des simulations d'impulsions CPLC selon différents modes de réalisation de l'invention. La figure 8A, donnée à titre de comparaison, correspond à une impulsion sans chirp mais avec une courbure du front d'impression de paramètre $\alpha$=3 fs/cm$^2$, qui se propage donc à une vitesse c ; cette situation peut être rapprochée de celle de la figure 2A.

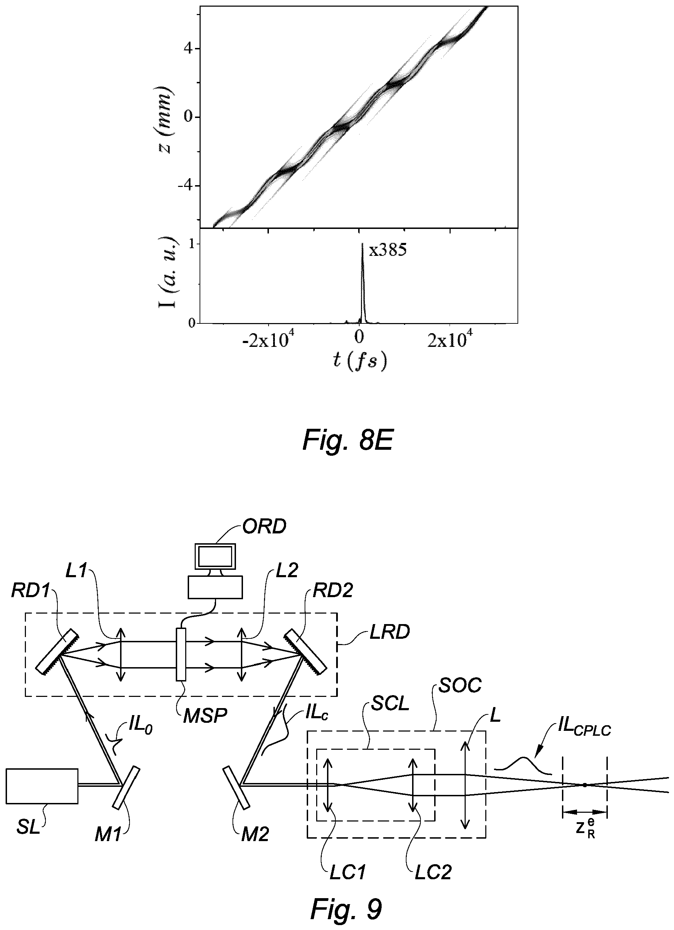

Les panneaux supérieurs des différentes figures montrent les profils spatio-temporels d'intensité sur l'axe optique des impulsions, les panneaux inférieurs leur profils temporels sur l'axe, multipliés par le coefficient $\varepsilon^{-1}$, dont la valeur est indiquée sur chaque figure, pour des raisons de visibilité. Dans tous les cas, $\lambda_0$=800 nm, $w_0$=5 cm, f=1 m, $\tau_F$=25 fs. Le paramètre $\alpha$=3 fs/cm$^2$ ($\tau_P$=75 fs) sauf dans le cas de la figure 8E, où $\alpha$=30 fs/cm$^2$ ($\tau_P$=750 fs).

La figure 8B représente le cas où $\beta$=12.230 fs$^2$, ce qui correspond à une vitesse sous-luminique $v$=0,7c. Cette situation peut être rapprochée de celle de la figure 2B.

La figure 8C représente le cas où $\beta$=-53.420 fs$^2$, ce qui correspond à une vitesse négative $v$=-c. Cette situation peut être rapprochée de celle de la figure 2C.

La figure 8D représente le cas où l'impulsion présente une phase spectrale d'ordre trois, c'est-à-dire un chirp quadratique : l'impulsion se propage avec une accélération uniforme, comme dans le cas de la figure 2D.

Dans le cas de la figure 8E l'impulsion présente une phase spectrale oscillante, dont il résulte une vitesse de propagation présentant une oscillation entre 0,3·c et c.

La figure 9 illustre schématiquement un système selon un mode de réalisation de l'invention.

Une source laser SL génère des impulsions laser ultrabrèves, dont la durée à mi-hauteur limitée par transformée de Fourier, $\tau_F$ est typiquement inférieure ou égale à 10 ps, voire à 1 ps. La source SL comprend généralement un oscillateur laser femtosecondes, le plus souvent à Ti : Saphir opérant en mode de verrouillage de phase, et une chaîne d'amplification.

Les impulsions $IL_0$ générées par la source SL sont dirigées, par l'intermédiaire d'un miroir M1, vers la ligne à retard dispersive LRD. Dans le mode de réalisation de la figure 9, il s'agit d'une ligne programmable, comprenant un premier réseau de diffraction (ou prisme) RD1 qui sépare les différentes composantes spectrales de la lumière incidente, une première lentille L1 pour collimater le faisceau dispersé par le réseau, un modulateur spatial de phase à cristaux liquides MSP, une deuxième lentille L2 pour focaliser le faisceaux sur un deuxième réseau de diffraction (ou prisme) RD2 qui recombine les différentes composantes spectrales. Un ordinateur ORD pilote le modulateur spatial de phase à cristaux liquides MSP, de manière à déphaser de manière contrôlée chaque composante spectrale du faisceau laser. Cela permet d'obtenir un chirp arbitraire, linéaire ou non linéaire.

Un deuxième miroir M2 dirige les impulsions avec chirp $IL_c$ issues de la ligne à retard dispersive vers le système optique chromatique SOC. Ce dernier est formé par un télescope afocal SCL, constitué de deux lentilles LC1, LC2 présentant une aberration chromatique longitudinale significative, et une lentille de focalisation L, sensiblement achromatique. La référence $IL_{CPLC}$ désigne l'impulsion avec chirp et courbure du front d'impulsion focalisée par la lentille L.

De nombreuses variantes sont possibles.

Par exemple, un chirp linéaire peut être introduit par une simple ligne à retard dispersive à prismes ou réseaux de diffraction, sans besoin d'avoir recours à un modulateur spatial de phase. Par ailleurs, de telles lignes de retard sont généralement présentes dans la chaîne d'amplification faisant partie de la source laser, et peuvent être utilisées pour obtenir le chirp nécessaire à la mise en œuvre de l'invention (avant d'amplifier des impulsions laser ultrabrèves il est courant de les étirer par introduction d'un chirp linéaire, puis de les recomprimer après amplification). Un chirp sensiblement linéaire peut également être obtenu en propageant l'impulsion à travers un milieu dispersif.

Une ligne à retard dispersive n'est pas le seul élément pouvant introduire un chirp, linéaire ou pas. Une alternative consiste à moduler la phase temporelle de l'impulsion au moyen d'un modulateur acousto-optique utilisé en tant que filtre dispersif programmable acousto-optique (AOPDF, de l'anglais « Acousto-Optic Programmable Dispersive Filter). En fait, tout dispositif permettant de moduler la phase optique d'une impulsion peut convenir à la mise en œuvre de l'invention.

Le système optique chromatique SOC peut aussi présenter une structure différente de celle représentée sur la figure 9. Par exemple, il peut s'agir d'une simple lentille chromatique, assurant à la fois la focalisation et l'introduction de la courbure du front d'impulsion.

Le plus souvent, l'aberration chromatique longitudinale du système SOC est fixe, étant déterminée par la structure et les matériaux constitutifs des lentilles qui le composent. Le paramètre $\alpha$ ne peut donc être modifié, de manière discontinue, qu'en changeant ces lentilles. Il est cependant possible d'utiliser un modulateur spatial de lumière et un miroir déformable pour obtenir un système chromatique SOC dont l'aberration chromatique longitudinale peut être contrôlée finement ; voir à ce propos [6].

L'invention peut être appliquée, en particulier, à l'accélération de particules (électrons ou ions) par laser ([7]). Par exemple, la génération d'impulsions laser « lentes » (vitesse v sensiblement inférieure à c, par exemple inférieure d'au moins 10% voire 20% ou plus) peut faciliter l'accélération d'ions, tandis qu'un réglage fin de la vitesse de propagation des impulsions autour de c peut être avantageuse pour l'accélération d'électrons relativistes par champ de sillage (« wakefield acceleration » en anglais). Aussi bien dans le cas des ions que dans celui des électrons, l'injection des particules est facilitée par l'utilisation d'impulsions de vitesse non constante, augmentant au cours du temps.

Références

[1] W. Milonni « Controlling the speed of light pulses », J. Phys. B : At. Mom/ Opt. Phys 35 (2002), R31-R56
[2] H. Vincenti et F. Quéré, « Attosecond lighthouses: how to use spatiotemporally coupled light fields to generate isolated attosecond pulses », Phys. Rev. Lett. 108, 113904 (2012).
[3] WO 2012/164483 « Procédé et dispositif de génération d'impulsions attosecondes isolées ».
[4] H. E. Kondakci, A. F. Abouraddy, « Diffraction-free pulsed optical beams via space-time corrélations », Opt. Express 24, 28659 (2016).
[5] D. Oron, E. Tal, Y. Silberberg « Scanningless depth-resolved microscopy », Opt. Express 13, 1468 (2005).
[6] B. Sun, P. S. Salter, M. J. Booth « Pulse front adaptative optics : a new method for control of ultrashort laser pulses », Optics Express Vol. 23, No. 15 (2015).
[7] E. Esarey, C. B. Schroeder, W. P. Leemans « Physics of laser-driven plasma-based electron accelerators », Reviews Of Modem Physics, Vol. 81 (2009).

**Revendications**

1. Procédé de contrôle de la vitesse d'une impulsion laser ultrabrève comprenant :

   - une étape d'application d'un chirp à l'impulsion ($IL_0$) ; et
   - une étape de focalisation de l'impulsion au moyen d'un système optique (SOC) présentant une aberration chromatique longitudinale ;

   moyennant quoi un pic d'intensité de l'impulsion ($IL_{CPLC}$) se déplace le long d'un axe de propagation (z) suivant, sur une longueur de propagation $\left(z_R^e\right)$ finie, un profil de vitesse fonction dudit chirp et de ladite aberration chromatique longitudinale.

2. Procédé selon la revendication 1 comprenant également une étape préalable de détermination d'au moins un paramètre, choisi parmi un paramètre ($\beta$) quantifiant ledit chirp et un paramètre ($\alpha$) quantifiant ladite aberration chromatique longitudinale, en fonction d'un profil de vitesse cible dudit pic d'intensité de ladite impulsion laser.

3. Procédé selon la revendication 2 dans lequel ladite étape préalable comprend la détermination d'au moins un paramètre quantifiant ledit chirp, ladite aberration chromatique étant considérée constante.

4. Procédé selon l'une des revendications 2 ou 3 dans laquelle la dérivée seconde de la phase spectrale $\varphi(\omega)$ de l'impulsion laser par rapport à la fréquence angulaire $\omega$, $\frac{\partial^2 \varphi}{\partial \omega^2}$, quantifiant le chirp, et la courbure du front d'impulsion $\alpha$, quantifiant l'aberration chromatique longitudinale, sont choisies de manière à respecter la relation :

$$\frac{\partial^2 \varphi}{\partial \omega^2} = \alpha w_0^2 z_R \left(\frac{1}{v(z)} - \frac{1}{c}\right)$$

où $w_0$ est le rayon de gorge avant focalisation du faisceau laser correspondant à une composante spectrale à une fréquence centrale de l'impulsion, considéré gaussien, et $z_R$ sa longueur de Rayleigh, c la vitesse de la lumière dans le vide et *v(z)* le profil de vitesse cible, exprimant la vitesse de déplacement du pic d'intensité de l'impulsion en fonction de sa position z le long de l'axe de propagation.

5. Procédé selon l'une des revendications précédentes dans lequel ladite impulsion ($IL_0$) présente une durée à mi-hauteur limitée par transformée de Fourier, $\tau_F$, inférieure ou égale à 10 ps et de préférence inférieure ou égale à 1 ps.

6. Procédé selon l'une des revendications précédentes dans lequel l'aberration chromatique longitudinale dudit système optique (SOC) est suffisamment importante pour que $\tau_p \geq \tau_F$, où :

   • $\tau_F$ est la durée à mi-hauteur limitée par transformée de Fourier de l'impulsion laser ;
   • $\tau_p = \alpha w_0^2$, où $\alpha$ est la courbure du front d'impulsion, quantifiant l'aberration chromatique longitudinale, et $w_0$ est le rayon de gorge avant focalisation du faisceau laser correspondant à une composante spectrale à une fréquence centrale de l'impulsion, ledit faisceau étant considéré gaussien.

7. Procédé selon l'une des revendications précédentes dans lequel ledit chirp est tel que la phase spectrale de l'impulsion laser présente une composante du troisième ordre en fréquence, moyennant quoi ledit pic d'intensité de l'impulsion se déplace le long dudit axe de propagation avec une accélération constante et non nulle sur ladite longueur de propagation finie.

8. Utilisation d'un procédé selon la revendication 7 pour l'accélération de particules chargées par laser.

9. Système pour la mise en œuvre d'un procédé selon l'une des revendications précédentes comprenant :

   • une source (SL) d'impulsions laser présentant une durée à mi-hauteur limitée par transformée de Fourier, $\tau_F$, inférieure ou égale à 10 ps et de préférence inférieure ou égale à 1 ps ;
   • un modulateur de phase optique (LRD), configure pour appliquer un chirp auxdites impulsions laser ; et
   • un système optique de focalisation (SOC) desdites impulsions lasers présentant une aberration chromatique longitudinale suffisamment importante pour que $\tau_p \geq \tau_F$, où $\tau_p = \alpha w_0^2$ où $\alpha$ est la courbure du front d'impulsion, quantifiant l'aberration chromatique longitudinale, et $w_0$ est le rayon de gorge avant focalisation du faisceau laser correspondant à une composante spectrale à une fréquence centrale de l'impulsion, ledit faisceau étant considéré gaussien.

10. Système selon la revendication 9 dans lequel ledit modulateur optique de phase est adapté pour appliquer auxdites impulsions un chirp réglable.

11. Système selon l'une des revendications 9 et 10 dans lequel ledit modulateur de phase optique est une ligne à retard dispersive.

## Patentansprüche

1. Verfahren zum Steuern der Geschwindigkeit eines ultrakurzen Laserimpulses, Folgendes beinhaltend:

   - einen Schritt des Anwendens eines Chirps auf den Impuls ($IL_0$), und
   - einen Schritt des Fokussierens des Impulses mithilfe eines optischen Systems (SOC), welches eine chromatische Längsaberration aufweist;

   wodurch ein Intensitäts-Peak des Impulses ($IL_{CPLC}$) sich entlang einer Fortpflanzungsachse (z) bewegt, welche über eine endliche Fortpflanzungslänge $\left( z_R^e \right)$ einem Geschwindigkeitsprofil folgt, welches vom Chirp und von der chromatischen Längsaberration abhängt.

2. Verfahren nach Anspruch 1, ebenfalls beinhaltend einen vorherigen Schritt des Bestimmens mindestens eines Parameters, gewählt aus einem Parameter ($\beta$), welcher das Chirp quantifiziert und einem Parameter ($\alpha$), welcher die chromatische Längsaberration entsprechend eines Zielgeschwindigkeitsprofils des Intensität-Peaks des Laserimpulses quantifiziert.

3. Verfahren nach Anspruch 2, bei welchem der vorherige Schritt die Bestimmung mindestens eines Parameters beinhaltet, welcher das Chirp quantifiziert, wobei die chromatische Aberration als konstant betrachtet wird.

4. Verfahren nach einem der Ansprüche 2 oder 3, bei welchem die zweite Ableitung der spektralen Phase $\varphi(\omega)$ des Laserimpulses in Bezug auf die Winkelfrequenz $\omega, \frac{\partial^2 \varphi}{\partial \omega^2}$, welche das Chirp quantifiziert, und die Krümmung der Impulsfront $\alpha$, welche die chromatische Längsaberration quantifiziert, so gewählt wird, dass folgende Beziehung erfüllt wird:

$$\frac{\partial^2 \varphi}{\partial \omega^2} = \alpha w_0^2 z_R \left( \frac{1}{v(z)} - \frac{1}{c} \right)$$

wobei $w_0$ der Kehlradius vor Fokussierung des als Gauß-Strahl betrachteten Laserstrahls ist, welcher einer Spektralkomponente bei einer Mittelfrequenz des Impulses entspricht, und $z_R$ seine Rayleigh-Länge, c die Geschwindigkeit des Lichts im Vakuum und *v(z)* das Zielgeschwindigkeitsprofil ist, welches die Geschwindigkeit der Bewegung des Intensitäts-Peaks des Impulses angesichts seiner Position z entlang der Fortpflanzungsachse ausdrückt.

5. Verfahren nach einem der vorhergehenden Ansprüche, bei welchem der Impuls ($IL_0$) eine Dauer bei halber Höhe, begrenzt durch Fourier-Transformierte, $\tau_F$, von kleiner oder gleich 10 ps und vorzugsweise von kleiner oder gleich 1 ps, aufweist.

6. Verfahren nach einem der vorhergehenden Ansprüche, bei welchem die chromatische Längsaberration des optischen Systems (SOC) bedeutend genug ist, damit $\tau_F \geq \tau_\rho$, wobei:

   • $\tau_F$ die Dauer bei halber Höhe, begrenzt durch Fourier-Transformierte, des Laserimpulses ist;
   • $\tau_\rho = \alpha w_0^2$, wobei $\alpha$ die Krümmung der Impulsfront ist, welche die chromatische Längsaberration quantifiziert, und wobei $w_0$ der Kehlradius vor Fokussierung des Laserstrahls ist, welcher einer spektralen Komponente bei einer Mittelfrequenz des Impulses entspricht, wobei der Strahl als Gauß-Strahl betrachtet wird.

7. Verfahren nach einem der vorhergehenden Ansprüche, bei welchem das Chirp so geartet ist, dass die spektrale Phase des Laserimpulses eine Komponente der dritten Ordnung in Frequenz aufweist, wodurch der Intensität-Peak des Impulses sich entlang der Fortpflanzungsachse mit einer konstanten Beschleunigung ungleich null über die endliche Fortpflanzungslänge bewegt.

8. Gebrauch eines Verfahrens nach Anspruch 7 zur Beschleunigung von durch Laser aufgeladenen Partikeln.

9. Vorrichtung zur Umsetzung eines Verfahrens nach einem der vorhergehenden Ansprüche, Folgendes beinhaltend:

   • eine Laserimpulsquelle (SL), welche eine Dauer bei halber Höhe, begrenzt durch Fourier-Transformierte, $\tau_F$, von kleiner oder gleich 10 ps und vorzugsweise von kleiner oder gleich 1 ps, aufweist;
   • einen optischen Phasenmodulator (LRD), welcher konfiguriert ist, um ein Chirp auf die Laserimpulse anzuwenden; und
   • ein optisches Fokussierungssystem (SOC) der Laserimpulse, welches eine chromatische Längsaberration aufweist, welche bedeutend genug ist, damit $\tau_\rho \geq \tau_F$, wobei $\tau_\rho = \alpha w_0^2$ wobei $\alpha$ die Krümmung der Impulsfront ist, welche die chromatische Längsaberration quantifiziert, und wobei $w_0$ der Kehlradius vor Fokussierung des Laserstrahls ist, welcher einer spektralen Komponente bei einer Mittelfrequenz des Impulses entspricht, wobei der Strahl als Gauß-Strahl betrachtet wird.

10. System nach Anspruch 9, bei welchem der optische Phasenmodulator geeignet ist, um ein verstellbares Chirp auf die Impulse anzuwenden.

11. System nach einem der Ansprüche 9 und 10, bei welchem der optische Phasenmodulator eine Leitung mit dispersiver Verzögerung ist.

**Claims**

1. A method for controlling the speed of an ultrashort laser pulse comprising:

   - a step of applying a chirp to the pulse ($IL_0$); and
   - a step of focusing the pulse by means of an optical system (SOC) having a longitudinal chromatic aberration;

   whereby an intensity peak of the pulse ($IL_{CPLC}$) moves along a propagation axis (z) following, over a finite propagation length $\left(z_R^e\right)$, a speed profile dependent on said chirp and on said longitudinal chromatic aberration.

2. The method as claimed in claim 1, further comprising a prior step of determining at least one parameter, chosen from a parameter ($\beta$) quantifying said chirp and a parameter ($\alpha$) quantifying said longitudinal chromatic aberration, according to a target speed profile of said intensity peak of said laser pulse.

3. The method as claimed in claim 2, wherein said prior step comprises determining at least one parameter quantifying said chirp, said chromatic aberration being considered constant.

4. The method as claimed in either of claims 2 and 3, wherein the second derivative of the spectral phase $\varphi(\omega)$ of the laser pulse with respect to the angular frequency $\omega$, $\frac{\partial^2 \varphi}{\partial \omega^2}$, quantifying the chirp, and the curvature of the pulse front $\alpha$, quantifying the longitudinal chromatic aberration, are chosen so as to satisfy the relationship:

$$\frac{\partial^2 \varphi}{\partial \omega^2} = \alpha w_0^2 z_R \left(\frac{1}{v(z)} - \frac{1}{c}\right)$$

   where $w_0$ is the waist radius before focusing of the laser beam corresponding to a spectral component at a centre frequency of the pulse, which is considered Gaussian, and $z_R$ is its Rayleigh length, c is the speed of light in a vacuum and $v(z)$ is the target speed profile, expressing the speed of movement of the intensity peak of the pulse according to its position z along the propagation axis.

5. The method as claimed in one of the preceding claims, wherein said pulse ($IL_0$) has a duration at half-maximum limited by Fourier transform, $\tau_F$, that is shorter than or equal to 10 ps and preferably shorter than or equal to 1 ps.

6. The method as claimed in one of the preceding claims, wherein the longitudinal chromatic aberration of said optical system (SOC) is large enough that $\tau_p \geq \tau_F$, where:

   • $\tau_F$ is the duration at half-maximum limited by Fourier transform of the laser pulse;
   • $\tau_p = \alpha w_0^2$ where $\alpha$ is the curvature of the pulse front, quantifying the longitudinal chromatic aberration, and $w_0$ is the waist radius before focusing of the laser beam corresponding to a spectral component at a centre frequency of the pulse, the laser beam being considered Gaussian.

7. The method as claimed in one of the preceding claims, wherein said chirp is such that the spectral phase of the laser pulse has a third-order component in frequency, whereby said intensity peak of the pulse moves along said propagation axis with a constant and nonzero acceleration over said finite propagation length.

8. The use of a method as claimed in claim 7 for accelerating charged particles via laser.

9. A system for implementing a method as claimed in one of the preceding claims, comprising:

   • a laser pulse source (SL) having a duration at half-maximum limited by Fourier transform, $\tau_F$, that is shorter than or equal to 10 ps and preferably shorter than or equal to 1 ps;
   • an optical phase modulator (LRD), configured to apply a chirp to said laser pulses; and
   • an optical system (SOC) for focusing said laser pulses exhibiting a longitudinal chromatic aberration that is large enough that $\tau_p \geq \tau_F$, where $\tau_p = \alpha w_0^2$ where $\alpha$ is the curvature of the pulse front, quantifying the longitudinal chromatic aberration, and where $w_0$ is the waist radius before focusing of the laser beam corresponding to a spectral component at a centre frequency of the pulse, which is considered Gaussian.

10. The system as claimed in claim 9, wherein said optical phase modulator is suitable for applying an adjustable chirp to said pulses.

11. The system as claimed in either of claims 9 and 10, wherein said optical phase modulator is a dispersive delay line.

Fig. 1

Fig. 2A

Fig. 2B

Fig. 2C

Fig. 2D

Fig. 3

Fig. 4

Fig. 5

Fig. 6

Fig. 7

Fig. 8A

Fig. 8B

Fig. 8C

Fig. 8D

*Fig. 8E*

*Fig. 9*

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- WO 2012164483 A

**Littérature non-brevet citée dans la description**

- **WEINER A.M.** *Review of Scientific Instrument,* 01 Mai 2001, vol. 71 (5), 1929-1960
- **W. MILONNI.** Controlling the speed of light pulses. *J. Phys. B : At. Mom/ Opt. Phys,* 2002, vol. 35, R31-R56
- **H. VINCENTI ; F. QUÉRÉ.** Attosecond lighthouses: how to use spatiotemporally coupled light fields to generate isolated attosecond pulses. *Phys. Rev. Lett.,* 2012, vol. 108, 113904
- **H. E. KONDAKCI ; A. F. ABOURADDY.** Diffraction-free pulsed optical beams via space-time corrélations. *Opt. Express,* 2016, vol. 24, 28659
- **D. ORON ; Y. SILBERBERG.** Scanningless depth-resolved microscopy. *Opt. Express,* 2005, vol. 13, 1468
- **B. SUN ; P. S. SALTER ; M. J. BOOTH.** Pulse front adaptative optics : a new method for control of ultrashort laser pulses. *Optics Express,* 2015, vol. 23 (15
- **E. ESAREY ; C. B. SCHROEDER ; W. P. LEEMANS.** Physics of laser-driven plasma-based electron accelerators. *Reviews Of Modem Physics,* 2009, vol. 81